# DEMANDE DE BREVET EUROPEEN

(11) **EP 2 246 305 A1**
(43) Date de publication de la demande: **03.11.2010**
(21) Numéro de dépôt: 10290178.2
(22) Date de dépôt: 01.04.2010
(51) Int. Cl.: C01G 45/00, C01G 49/00, C01B 13/02

(54) **Oxydes mixtes fer-manganese pour la production d'oxygène à haute température**

(30) Priorité: 29.04.2009 FR 0902095
(71) Demandeur: IFP Energies nouvelles, 92852 Rueil-Malmaison Cedex (FR)
(72) Inventeur: Lambert, Arnold, 42410 Chavanay (FR)

(57) **Abrégé**

L'invention concerne l'utilisation de matériaux de type oxydes mixtes fermanganèse pour la production d'oxygène à haute température, notamment par séparation de l'oxygène de l'air, lesdits matériaux pouvant, de manière réversible, à haute température, se réduire lorsqu'ils sont soumis à une baisse de la pression partielle en oxygène et s'oxyder lorsque la pression partielle en oxygène est plus élevée.

La forme oxydée des oxydes mixtes fer - manganèse présente une structure bixbyite et/ou hématite.

## Description

### Domaine de l'invention

L'invention concerne des matériaux pour la production d'oxygène à haute température, notamment par séparation de l'oxygène de l'air, lesdits matériaux pouvant, de manière réversible, à haute température, se réduire lorsqu'ils sont soumis à une baisse de la pression partielle en oxygène et s'oxyder lorsque la pression partielle en oxygène est plus élevée.

Les matériaux comprennent des oxydes mixtes fer - manganèse dont la forme oxydée présente une structure bixbyite et/ou hématite.

### Examen de l'art antérieur

Dans un contexte de demande énergétique mondiale croissante, le captage du dioxyde de carbone en vue de sa séquestration est devenu une nécessité incontournable afin de limiter l'émission de gaz à effet de serre préjudiciables à l'environnement.

L'oxycombustion est l'un des procédés prometteurs pour la production d'énergie intégrant le captage du CO₂. Un tel procédé est décrit, par exemple, dans le brevet W007039687A. La mise en oeuvre de ce procédé nécessite l'utilisation d'une unité de production d'oxygène capable d'approvisionner la chambre d'oxycombustion en oxygène pur ou dilué dans un flux de CO₂ et/ou de vapeur d'eau.

Un autre procédé de production d'énergie intégrant le captage du CO₂ est la séparation pré-combustion du CO₂ à l'aide d'installations de type IGCC (Integrated gasification combined cycle), dont le principe est décrit dans le brevet US 6 824 575. Comme pour l'oxycombustion, cette technologie nécessite l'utilisation d'une unité de production d'oxygène capable d'approvisionner une unité de gazéification avec de l'oxygène pur ou dilué dans un flux de vapeur d'eau et/ou de CO₂.

Aussi, la production de gaz de synthèse (CO+H₂) à partir de matières premières carbonées diverses, telles que charbon, pétrole, gaz naturel, biomasse est une étape clef dans la production d'hydrogène ou de carburants de synthèse qui nécessite un oxygène aussi exempt d'azote que possible pour éviter de diluer le gaz de synthèse obtenu.

Dans tous ces cas, il est important d'éviter, ou au moins de minimiser, la présence d'azote. Par contre, il peut être avantageux d'utiliser un mélange d'oxygène et d'un gaz inerte, qui peut être de la vapeur d'eau et/ou du dioxyde de carbone, faciles à séparer de l'oxygène ou pouvant selon les applications, être utilisé comme tel.

La technologie la plus utilisée actuellement pour la production de quantités d'oxygène suffisantes pour ce type de procédés est la séparation de l'air par distillation cryogénique, mais le coût énergétique de cette technologie est élevé puisqu'il est nécessaire de refroidir l'air à très basse température pour ensuite permettre sa distillation. L'oxygène froid obtenu doit ensuite être réchauffé avant introduction dans la chambre d'oxycombustion ou dans l'unité de gazéification. De plus, le coût de production de l'oxygène obtenu augmente de façon importante avec la pureté désirée, et la consommation énergétique importante entraîne une émission supplémentaire de CO₂.

Il serait donc avantageux de disposer d'une méthode de production d'oxygène à haute température (500-1100°C) afin de limiter le coût de captage du CO₂.

Le brevet US 6 059 858 décrit une technologie de production d'oxygène à haute température par sorption sélective de l'oxygène de l'air s'appuyant sur le procédé CAR (Ceramic Autothermal Recovery) : dans un premier temps, un matériau céramique réagit sélectivement avec l'oxygène de l'air, et cet oxygène est ensuite désorbé par le matériau sous l'action d'une baisse de la pression partielle d'oxygène, créée en tirant sous vide ou en purgeant le matériau avec un gaz inerte (vapeur d'eau, CO₂ ou mélange) à température constante (partial pressure swing process). Les étapes de sorptiondésorption sont répétées cycliquement, et l'utilisation de plusieurs réacteurs à lit fixe en parallèle permet de générer un flux suffisant de CO₂/Vapeur enrichi en oxygène.

Une variante de l'étape de régénération de la céramique consiste à augmenter la température à pression constante (température swing process).

Le brevet FR 2 895 272 décrit également un procédé continu de production d'oxygène à haute température basé sur les propriétés d'adsorption/désorption de céramiques du type perovskite ou fluorite utilisées dans un réacteur cylindrique tournant.

L'efficacité de ces procédés dépend avant tout des propriétés du matériau céramique utilisé : sélectivité pour l'oxygène, capacité de transfert d'oxygène, cinétiques de sorption/désorption et stabilité physico-chimique.

Ces procédés nécessitent l'utilisation de matériaux qui réagissent avec l'oxygène de manière réversible en fonction des conditions de température et de pression. Plusieurs matériaux répondant à ces critères sont décrits dans les demandes de brevet US2005/0176588, US 2005/0176589 et US2005/0226798, parmi lesquels les perovskites, les brownmillerites, les matériaux supraconducteurs du type YBaCuO et les oxydes mixtes du type cérine et zircone dopés. Tous ces matériaux sont, dans une certaine gamme de température, connus pour leurs propriétés de conduction mixte ionique et électronique (MIEC, Mixed Ionic Electronic Conductors) et présentent, en plus de ces propriétés de conduction, une capacité de sorption de l'oxygène relativement importante. Les défauts des différentes structures (lacunes en oxygène, sites d'oxygène interstitiels) permettent aux matériaux de réagir avec l'oxygène à haute température (ils se "chargent" en oxygène) et de désorber tout ou partie de cet oxygène en fonction des conditions de température et de pression (Lorsque la pression partielle en O2 P_{O2} diminue, ou lorsque la température T augmente). Le brevet US2005/0176588 revendique également l'ajout d'oxydes métalliques simples (MOₙ, n=0.5, 1, 1.5, 2, M=Cu, Co, Ni, Bi, Pb, V, Mn, Cr) aux MIEC décrits ci-dessus, afin d'augmenter la capacité de transfert d'oxygène du matériau composite obtenu.

### Objets de l'invention

L'invention concerne l'utilisation d'oxydes mixtes de type fer-manganèse de formule générale (MnₓFe₁₋ₓ)₂O₃ où x est compris entre 0,10 et 0,99 pour la production d'oxygène à une température supérieure ou égale à 500°C.

Les oxydes mixtes selon l'invention peuvent être utilisés dans tout type de procédé de production d'oxygène. L'invention concerne donc également un procédé de production d'oxygène à haute température mettant en oeuvre une masse active comprenant au moins un oxyde mixte de type fer-manganèse de formule générale (MnₓFe₁₋ₓ)₂O₃ où x est compris entre 0,10 et 0,99, avantageusement par séparation de l'oxygène de l'air.

### Description de l'invention

### Résumé de l'invention

L'invention concerne l'utilisation d'oxydes mixtes fer-manganèse de formule générale (MnₓFe₁₋ₓ)₂O₃ où x est compris entre 0,10 et 0,99 pour la production d'oxygène à une température supérieure ou égale à 500°C.

De préférence, x est compris entre 0,25 et 0,95, de manière plus préférée x est compris entre 0,4 et 0,95, et de manière encore plus préférée x est compris entre 0,75 et 0,95. Avantageusement la température d'utilisation est au moins égale à 800°C, de manière très préférée la température est comprise entre 900 et 1100°C.

L'invention concerne également un procédé de production d'oxygène à une température supérieure ou égale à 500°C mettant en oeuvre une masse active comprenant au moins un oxyde mixte fer-manganèse de formule générale (MnₓFe₁₋ₓ)₂O₃ où x est compris entre 0,10 et 0,99. De préférence, x est compris entre 0,25 et 0,95, de manière très préférée x est compris entre 0,4 et 0,95, et de manière encore plus préférée, x est compris entre 0,75 et 0,95.

La masse active peut comprendre également un liant céramique.

Le liant céramique est choisi de préférence parmi l'alumine, les aluminates de type spinelle, la silice, le dioxyde de titane, le kaolin, la cérine zircone, la bentonite ou des catalyseurs usagés.

Le procédé selon l'invention peut être mis en oeuvre par séparation de l'oxygène de l'air. Avantageusement le procédé est conduit à une température supérieure ou égale à 800°C, de manière plus préférée entre 900 et 1100°C.

Dans le procédé selon l'invention, on peut choisir la valeur de x de manière optimisée en fonction de la température du procédé.

### Description détaillée de l'invention

La présente invention concerne l'utilisation d'oxydes mixtes du fer et du manganèse pour la production d'oxygène à haute température.

La présente invention concerne également un procédé de production d'oxygène utilisant une masse active comprenant au moins un oxyde mixte du fer et du manganèse. Le procédé selon l'invention peut être avantageusement mis en oeuvre selon les procédés connus de type PSA (pressure swing adsorption) ou TSA (temperature swing adsorption).

De manière surprenante, les oxydes mixtes fer-manganèse permettent de produire une quantité substantiellement plus importante d'oxygène que les matériaux décrits dans les brevets de l'art antérieur à haute température, c'est-à-dire pour des températures supérieures ou égales à 500°C.

En effet, contrairement aux matériaux de type MIEC, la production d'oxygène est liée à une réaction chimique de l'oxyde mixte provoquée par les variations de pression partielle à une température donnée. La forme oxydée de l'oxyde mixte est réduite lorsqu'elle est soumise à une faible pression partielle d'oxygène et la forme réduite de l'oxyde mixte est oxydée lorsque qu'elle est soumise à une forte pression partielle d'oxygène.

Les oxydes mixtes fer-manganèse ont en outre un comportement différent des oxydes simples de fer (hématite) et de manganèse (bixbyite) qui ne peuvent être utilisés à haute température pour la production d'oxygène.

En effet, lorsque l'oxyde de fer sous forme hématite (Fe₂O₃) est chauffé sous air à pression atmosphérique jusqu'à une température de 900 ou 950°C puis soumis à une variation de pression partielle d'oxygène entre P(O₂)=0.21 et P(O₂)<0.001 aucune variation de masse significative de l'échantillon n'est observée. L'oxyde de fer Fe₂O₃ est stable dans ces conditions de température et de pression d'oxygène.

D'autre part, lorsqu'on chauffe sous air (P(O₂)=0,21 atm) l'oxyde de manganèse MnO₂, cet oxyde subit une première décomposition vers 550°C, selon la réaction (1), pour donner la bixbyite (Mn₂O₃). Cette réduction de MnO₂ en Mn₂O₃ s'accompagne d'une évolution de 10% massique d'oxygène et est irréversible à P(O₂)≤0,21 atm. Une seconde décomposition irréversible est observée vers 950°C, selon la réaction (2), dégageant 3,3% massique d'oxygène. Les oxydes de manganèse MnO₂ et Mn₂O₃ sont donc instables sous air à haute température aux pressions partielles en oxygène inférieures ou égales à 0,21 atmosphère. Lors du chauffage sous air de la bixbyite Mn₂O₃ à 900°C, l'oxyde est stable tant que la pression partielle en oxygène est égale à 0,21 atm. A 900°C, lorsque la pression partielle en oxygène diminue (P(O₂)<0,0001), l'oxyde subit une perte de masse d'environ 3,4%, correspondant à la réduction de la bixbyite en haussmannite selon la réaction (2). Cette réduction est irréversible, la haussmanite ne se réoxydant pas lorsque la pression partielle en oxygène est augmentée, toujours à 900°C. Lorsque la température est augmentée sous air jusqu'à 950°C, aucun dégagement d'oxygène supplémentaire n'est observé, ni lorsque la haussmanite est soumise, à cette température, à des variations de pression partielle en oxygène entre P(O₂)=0.21 et P(O₂)<0.0001. Mn₃O₄ ne peut donc pas être réduit en MnO ou Mn à ces températures sous le seul effet d'une baisse de la pression partielle en oxygène.

Réaction (1) MnO₂ → ½ Mn₂O₃ + 1/4 O₂

Réaction (2) Mn₂O₃ → 2/3 Mn₃O₄ + 1/6 O₂

De manière surprenante, contrairement aux oxydes simples, lorsque certains oxydes mixtes du fer et du manganèse sont chauffés à une température suffisante (supérieure ou égale à 500°C, et de préférence supérieure ou égale à 800°C) et soumis à une variation de la pression partielle d'oxygène, la réaction (3) a été observée, et cette réaction est de plus réversible. Lorsque la pression partielle d'oxygène diminue (de P(O₂)=0,21 à P(O₂)<0.0001), une perte de masse des oxydes mixtes est observée, liée à la réduction desdits oxydes mixtes, libérant au passage une proportion d'oxygène gazeux correspondant à la perte de masse observée. Le passage d'une pression partielle en oxygène faible à une pression partielle plus élevée entraîne une prise de masse liée à la réoxydation de l'oxyde mixte réduit, captant l'oxygène présent.

Réaction (3) (MnₓFe₁₋ₓ)₂O₃ ↔ 2/3 (MnₓFe₁₋ₓ)₃O₄ + 1/6 O₂

Ces oxydes mixtes présentent des capacités de transfert d'oxygène importantes, et sont donc potentiellement utilisables pour la production d'oxygène à haute température.

Lorsque la réaction (3) est totale, la capacité totale théorique de transfert d'oxygène de l'oxyde mixte est atteinte. La capacité totale théorique pour les oxydes simples de fer et de manganèse est respectivement de 3,34% massique et 3,78% massique. Il en résulte que la capacité totale théorique pour les oxydes mixtes fer-manganèse selon l'invention est comprise entre ces deux valeurs, en fonction de la valeur de x.

La capacité de transfert d'oxygène exploitée dans l'invention est constituée par la fraction réversible de la capacité totale. La capacité de transfert d'oxygène réversible dépend notamment de la composition de l'oxyde mixte, du temps, de la température et de la pression partielle en oxygène. On peut ainsi envisager d'utiliser la fraction restante de la capacité totale dans des réactions différentes, par exemple des réactions d'oxydation d'un combustible.

### Préparation des oxydes mixtes de fer-manganèse

Les oxydes mixtes de fer-manganèse peuvent être préparés par la méthode de frittage communément utilisée par l'industrie des céramiques. Cette méthode comprend les opérations suivantes. Les oxydes métalliques, carbonates ou autres composés à partir desquels l'oxyde mixte sera formé à l'issue d'une réaction à l'état solide, sont mélangés dans les proportions voulues de manière homogène, puis humidifiés et broyés. Après séchage, et éventuellement mise en forme par pressage, la poudre obtenue est portée à une température suffisante (≥ 900°C) sous air pour provoquer la réaction chimique entre les réactifs. Pour améliorer l'homogénéité au sein de la structure du matériau, la poudre obtenue peut être broyée et mélangée à nouveau, puis portée à haute température. Ces opérations peuvent être répétées autant de fois que nécessaire.

La synthèse des oxydes mixtes de fer-manganèse peut également être réalisée par la méthode dite selon les termes anglophones "solution combustion synthesis", où un mélange de précurseurs métalliques (nitrates, acétates, chlorures, oxalates...) dans les proportions voulues et d'un combustible soluble dans l'eau, de l'urée par exemple, est chauffé jusqu'à l'ignition du mélange.

Une autre méthode de synthèse, appelée "spray pyrolyse", consiste à pulvériser en gouttelettes de taille contrôlable un mélange dans les proportions voulues de précurseurs métalliques (nitrates, acétates, chlorures, oxalates...), puis à introduire l'aérosol ainsi formé dans un four maintenu à une température suffisante, typiquement supérieure à 600°C, pour évaporer le solvant et déclencher la décomposition des précurseurs et la formation de l'oxyde mixte. Les particules peuvent ensuite être calcinées à nouveau dans un four.

Une variante de cette méthode, appelée "spray-drying", consiste à simplement sécher les gouttelettes au sein du four (température inférieure à 300°C, préférentiellement inférieure à 200°C) puis à calciner sous air les particules obtenues à une température suffisante pour déclencher la décomposition des précurseurs et la formation de l'oxyde mixte de fer-manganèse.

De manière préférée, la synthèse des oxydes mixtes est effectuée par co-précipitation d'un mélange de précurseurs métalliques choisis dans le groupe des nitrates, acétates et chlorures par une base. Cette base est, par exemple, la soude, la potasse, le carbonate de sodium ou de potassium, ou l'ammoniaque. Le précipité obtenu est ensuite lavé, séché et calciné à une température suffisante pour permettre la formation des oxydes mixtes, de préférence au delà de 600°C.

### Utilisation des oxydes mixtes Fe-Mn selon l'invention - Procédé de production d'oxygène à haute température

Les oxydes mixtes de composition et de structure (MnₓFe₁₋ₓ)₂O₃ où 0,1≤x≤0,99 sont utilisés selon l'invention pour la production d'oxygène à haute température, notamment à des températures supérieures ou égales à 500°C, de manière préférée supérieures ou égales à 800°, et de manière encore plus préférée comprises entre 900 et 1100°C.

De manière préférée, on utilisera des oxydes mixtes pour lesquels x est compris entre 0,25 et 0,95, de manière très préférée entre 0,4 et 0,95, et de manière encore plus préférée entre 0,75 et 0,95.

En fonction de la valeur de x et de la température de calcination (de manière générale comprise entre 600 et 1000°C), la structure de l'oxyde mixte sera du type bixbyite Mn₂O₃ pour les valeurs de x élevées (par exemple supérieures ou égales à 0,9), du type hématite Fe₂O₃ pour les valeurs de x faibles (par exemple inférieures ou égales à 0,1), ou bien un mélange de ces deux phases cristallographiques. Hormis les cas x=0 (oxyde de fer simple) et x=1 (oxyde de manganèse simple), la structure de l'oxyde mixte peut être décrite comme un mélange de bixbyite dont une partie des atomes Mn est substituée par Fe et d'hématite dont une partie des atomes Fe est substituée par Mn.

Un liant céramique peut être ajouté aux oxydes mixtes de fer-manganèse afin d'en augmenter la tenue mécanique. Les liants susceptibles d'être utilisés sont l'alumine, les aluminates de type spinelle, la silice, le dioxyde de titane, le kaolin, la cérine zircone, la bentonite ou des catalyseurs usagés.

La capacité de transfert d'oxygène du matériau composite (utilisable comme masse active dans un procédé de production d'oxygène) sera généralement proportionnelle à la quantité d'oxyde mixte fer-manganèse dans le matériau composite.

La capacité de transfert d'oxygène réversible dépend notamment de la composition de l'oxyde mixte, du temps, de la température et de la pression partielle en oxygène. Chaque oxyde mixte (FeₓMn₁₋ₓ)₂O₃ possède une température optimale d'utilisation. On peut donc envisager une optimisation de la formulation de l'oxyde mixte (variation de x) en fonction de la température d'utilisation visée pour un procédé de production d'oxygène dans des conditions opératoires données.

Il est également envisageable de doper les oxydes mixtes de fer-manganèse à l'aide des métaux de transition des groupes IIIB à IIB de la classification périodique des éléments (par exemple Ti, V, Cr, Co, Ni, Cu, Y, Zr, Mo, La, Ce) ou par des alcalins (Li, Na, K, Rb, Cs) ou alcalino-terreux (Be, Mg, Ca, Sr, Ba) ou encore par un ou plusieurs éléments des groupes IIIA à VA de la classification périodique. Un tel dopage, limité à 10% atomique par rapport à Fe+Mn, peut permettre d'augmenter la capacité de transfert d'oxygène et/ou les cinétiques d'oxydation et de réduction et/ou la résistance mécanique des matériaux.

Les oxydes mixtes de fer-manganèse peuvent être utilisés sous forme de poudre en lit fluidisé, ou bien en lit fixe sous forme de billes, d'extrudés, ou de monolithes. Le monolithe peut soit être constitué exclusivement d'un oxyde mixte fer-manganèse, ou bien enduit sur la surface des canaux d'un monolithe céramique (cordiérite, aluminate, perovskite, carbure de silicium, mullite...) ou métallique.

Le procédé de production d'oxygène selon l'invention peut être avantageusement mis en oeuvre pour la séparation de l'oxygène de l'air.

### Exemples

Les exemples ci-après illustrent l'invention à titre non limitatif.

### Exemples 1 à 10 : Préparation des oxydes

L'oxyde de fer Fe₂O₃ (exemple 1 comparatif) est préparé par co-précipitation du nitrate de fer par la soude. Le précipité obtenu est ensuite filtré, lavé, séché à 120°C puis calciné sous air à 1000°C pendant deux heures.

L'oxyde de manganèse Mn₂O₃ (exemple 10 comparatif) est préparé par co-précipitation du nitrate de manganèse par la soude. Le précipité obtenu est ensuite filtré, lavé, séché à 120°C puis calciné sous air à 1000°C pendant deux heures.

Les oxydes mixtes fer-manganèse (exemples 2 à 9) sont préparés par co-précipitation d'un mélange de nitrates de fer et de manganèse par la soude. Le précipité obtenu est ensuite filtré, lavé, séché à 120°C puis calciné sous air à 1000°C pendant deux heures.

### Exemple 11 : Mesure de la capacité de transfert d'oxygène des oxydes préparés aux exemples 1 à 10

Une thermobalance SETARAM TAG24 a été équipée d'un automate d'alimentation en gaz permettant de simuler les étapes de réduction/oxydation successives vues par les particules dans un procédé de type CAR.

Les tests sont réalisés à une température de 900°C et éventuellement 950°C, avec 30mg (± 2mg) d'échantillon contenu dans une nacelle en Pt. Afin de permettre une comparaison entre les différents échantillons, la distribution en taille des particules est sélectionnée entre 30 et 40 µm par tamisage. Le gaz de désorption de l'oxygène utilisé est l'azote pur, et le gaz d'oxydation est l'air sec.

La montée en température est effectuée sous air, à un débit de 80 ml/min. Lorsque le système a atteint la température de consigne, après stabilisation pendant 5 minutes sous air, quelques cycles air/azote/air sont réalisés.

Les résultats sont regroupés dans le Tableau 1 qui montre la capacité de transfert d'oxygène en fonction de x (et du % atomique Mn/(Mn+Fe)) et de la température de test pour les oxydes des exemples 1 à 10.

Les oxydes simples des exemples comparatifs 1 (Fe₂O₃) et 10 (Mn₂O₃) ont une capacité de transfert d'oxygène nulle à haute température (900 et 950°C), ce qui montre l'intérêt d'utiliser des oxydes mixtes pour la production d'oxygène à haute température.

En effet, lorsque l'oxyde de fer sous forme hématite (Fe₂O₃) est chauffé sous air à pression atmosphérique jusqu'à une température de 900 ou 950°C puis soumis à une variation de pression partielle d'oxygène entre P(O₂)=0,21 et P(O₂)<0.001 (Exemple 1), aucune variation de masse significative de l'échantillon n'est observée. L'oxyde de fer Fe₂O₃ est stable dans ces conditions de température et de pression d'oxygène.

D'autre part, bien qu'instable dans les mêmes conditions de température et de pression d'oxygène, l'oxyde de manganèse Mn₂O₃ (exemple 10) est réduit de manière irréversible en Mn₃O₄, et l'oxyde simple du manganèse ne peut donc pas être utilisé dans un procédé de production d'oxygène à haute température.

En revanche, un faible pourcentage de fer (10 % atomique : Exemple 9) permet d'obtenir une capacité de transfert d'oxygène réversible importante : 3,05 % massique à 900°C.

La capacité de transfert d'oxygène du matériau préparé selon l'exemple 6 (Fe_{0,5}Mn_{0,5})₂O₃ a été mesurée à 900 et à 950°C. A 900°C, le matériau perd environ 1,3% poids lorsque la pression partielle en oxygène varie entre celle de l'air (0,21 atm) et celle de l'azote pur (P(O₂)<0,0001 atm). Cette perte de masse est liée à la réduction du matériau selon la réaction (3). Lorsque le matériau est de nouveau exposé à une pression partielle en oxygène de 0,21 atm, la réaction a lieu dans le sens inverse (oxydation), et le matériau est régénéré, prêt à relâcher l'oxygène qu'il vient de capter dans un cycle ultérieur. A 950°C, la capacité de transfert d'oxygène réversible du matériau est beaucoup plus importante, de l'ordre de 2,5 % massique après 18 cycles successifs.

**Tableau 1**

| Exemple | x | Mn/(Mn+Fe) % atomique | Température de test °C | Capacité de transfert d'oxygène mesurée % massique |
|---|---|---|---|---|
| 1 (comparatif) | 0 | 0 | 900 | 0 |
| | | | 950 | 0 |
| 2 | 0,1 | 10 | 900 | 0,05 |
| | | | 950 | 0,09 |
| 3 | 0,2 | 20 | 900 | 0,20 |
| | | | 950 | 0,30 |
| 4 | 0,25 | 25 | 900 | 0,25 |
| | | | 950 | 0,55 |
| 5 | 0,4 | 40 | 900 | 0,30 |
| | | | 950 | 1,8 |
| 6 | 0,5 | 50 | 900 | 1,3 |
| | | | 950 | 2,5 |
| 7 | 0,75 | 75 | 900 | 1,05 |
| | | | | |
| 8 | 0,8 | 80 | 900 | 2,2 |
| | | | | |
| 9 | 0,9 | 90 | 900 | 3,05 |
| | | | | |
| 10 (comparatif) | 1 | 100 | 900 | 0 |
| | | | 950 | 0 |

## Revendications

1. Utilisation d'oxydes mixtes fer-manganèse de formule générale (MnₓFe₁₋ₓ)₂O₃ où x est compris entre 0,10 et 0,99 pour la production d'oxygène à une température supérieure ou égale à 500°C.

2. Utilisation selon la revendication 1 dans laquelle x est compris entre 0,25 et 0,95.

3. Utilisation selon la revendication 2 dans laquelle x est compris entre 0,4 et 0,95.

4. Utilisation selon la revendication 3 dans laquelle x est compris entre 0,75 et 0,95.

5. Utilisation selon l'une des revendications précédentes dans laquelle la température est supérieure ou égale à 800°C.

6. Utilisation selon la revendication 5 dans laquelle la température est comprise entre 900 et 1100°C.

7. Procédé de production d'oxygène à une température supérieure ou égale à 500°C mettant en oeuvre une masse active comprenant au moins un oxyde mixte fer-manganèse de formule générale (MnₓFe₁₋ₓ)₂O₃ où x est compris entre 0,10 et 0,99.

8. Procédé de production d'oxygène selon la revendication 7 dans lequel x est compris entre 0,25 et 0,95.

9. Procédé de production d'oxygène selon la revendication 8 dans lequel x est compris entre 0,4 et 0,95.

10. Procédé de production d'oxygène selon la revendication 9 dans lequel x est compris entre 0,75 et 0,95.

11. Procédé de production d'oxygène selon l'une des revendications 7 à 10 dans lequel la masse active comprend également un liant céramique.

12. Procédé de production d'oxygène selon la revendication 11 dans lequel le liant céramique est choisi parmi l'alumine, les aluminates de type spinelle, la silice, le dioxyde de titane, le kaolin, la cérine zircone, la bentonite ou des catalyseurs usagés.

13. Procédé de production d'oxygène selon l'une des revendications 7 à 12 par séparation de l'oxygène de l'air.

14. Procédé de production d'oxygène selon l'une des revendications 7 à 13 dans lequel la température est supérieure ou égale à 800°C.

15. Procédé de production d'oxygène selon l'une des revendications 7 à 14 dans lequel la température est comprise entre 900 et 1100°C.

16. Procédé de production d'oxygène selon l'une des revendications 7 à 15 dans lequel on choisit la valeur de x de manière optimisée en fonction de la température du procédé.
